# EUROPÄISCHE PATENTSCHRIFT

(11) **EP 0 485 914 B1**
(45) Veröffentlichungstag und Bekanntmachung des Hinweises auf die Patenterteilung: **27.07.1994**
(21) Anmeldenummer: 91119123.7
(22) Anmeldetag: 11.11.1991
(51) Int. Cl.: G01M 3/40, G01M 3/04, G01M 3/18

(54) **Verfahren zur Erkennung und Ortung von Leckagen an Abwassertransportleitungen**
Method of detecting and locating leaks in sewage pipes
Procédé pour détecter et localiser des fuites dans des conduites d'égouts

(30) Priorität: 12.11.1990 DE 4035963
(43) Veröffentlichungstag der Anmeldung: 20.05.1992
(73) Patentinhaber: THYSSEN INDUSTRIE AG, 45128 Essen (DE)
(72) Erfinder:
(74) Vertreter: Dahlkamp, Heinrich-Leo, Dipl.-Ing.

(56) Entgegenhaltungen:
- EP-A- 0 298 303
- DE-A- 3 503 391
- US-A- 3 800 217

## Beschreibung

Die Erfindung betrifft ein Verfahren zur Erkennung und Ortung von Leckagen an Abwassertransportleitungen, die vorzugsweise aus duktilen Gußrohren mit Polyethylen (PE)-Umhüllung bestehen. Abwassertransportsysteme mit erhöhten Anforderungen an Dichtheit werden z.B. in Trinkwasserschutzzonen installiert. Zur Erhöhung der Sicherheit gegen Infiltration von Abwasser in das Grundwasser wurden doppelwandige Kanäle vorgeschlagen, wo nach einer Leckage des Mediumrohres der Leckagestrom durch das Mantelrohr zu einem als Pumpensumpf ausgebildeten Schacht kontrolliert geführt wird. Der Ringspalt zwischen Medienrohr und Mantelrohr kann so aufgeführt werden, daß er turnusmäßig auf Dichtheit geprüft werden kann. Ebenfalls können geeignete Sensoren den Leckagefall an eine Überwachungszentrale melden und dabei zumindest die betroffene Haltung anzeigen.

Der beschriebene technische Aufwand zur Erzielung der Sicherheit ist hoch. Es hat daher nicht an Bemühungen gefehlt, dieselbe Sicherheit mittels geeigneter einwandiger Kanäle zu bekommen, die von ihren Materialeigenschaften und von ihrer Verbindungstechnik die nötigen Voraussetzungen mitbringen und durch zusätzliche Integration einer Leckanzeige eine regelmäßige bzw. permanente Dichtheitskontrolle - sowohl für das Rohr als auch für die Verbindungen - ermöglichen.

Eine dieser Möglichkeiten ist in der DE 38 11 454 A1 beschrieben. Hier wird eine Technik vorgeschlagen, in der speziell vorbereitete Rohre, z.B. duktile Gußrohre mit Polyethylen(PE)-Umhüllung mit zwischen Rohrwand und Umhüllung eingelegten Leckmeldedrähten, eingesetzt werden. Der Produktionsaufwand und auch der Aufwand bei der Rohrverlegung ist beträchtlich. Zusätzlich ist für die Installation der Versorgungs- und Auswerteelektronik ein gewisser technischer Aufwand zu berücksichtigen.

Der Erfindung liegt die Aufgabe zugrunde, ein Leckanzeige- und Ortungssystem zu schaffen, das mit dem serienmäßig ausgebildeten Rohr auskommt und auch bei der Rohrverlegung keinen zusätzlichen Installationsaufwand erforderlich macht.

Die Aufgabe wird, erfindungsgemäß dadurch gelöst, daß dem Abwasserstrom ein elektrisches Potential aufgeprägt wird, welches im Falle einer Leckage im umgebenden Erdreich detektiert werden kann. Es hat sich hierbei als besonders günstig erwiesen, daß als Rohrmaterial ein duktiles Gußrohr mit einer Polyethylen-Umhüllung nach DIN 30 674, Teil 1, verlegt und seine Verbindungen mit baustellenseitig zu applizierenden wärmeschrumpfenden Manschetten aus vernetztem Polyethylen (PE) nach DIN 30 672 nachumhüllt werden. Bei einwandfreier Durchführung dieser Arbeiten ist die Rohrleitung durch einen geschlossenen Polyethylenmantel mit einem spezifischen Umhüllungswiderstand von > 10⁸Ωm² umhüllt.

Das in der Rohrleitung fließende Abwasser ist als elektrischer Leiter anzusehen, dem künstlich, zweckmäßig über eine Elektrode eine Potentialdifferenz gegenüber dem die Rohrleitung umgebenden Erdreich aufgeprägt wird. Dabei kann das Potential von einem Potentialgeber über ein Zuführungskabel und die Eisenwand des Rohres dem Abwasserstrom aufgeprägt werden. Die Potentialdifferenz gegenüber dem Erdreich bleibt über die Rohrleitungslänge erhalten, solange die Polyethylen-Umhüllung unversehrt ist.

Tritt nun ein Schadensfall ein, der eine Leckage zur Folge hat, wird sich durch den Austritt des Abwassers ins Erdreich die Potentialdifferenz ausgleichen; ist das Potential des Abwasserstromes in geeigneter Weise mit Wechselspannungsanteilen versehen, so ändern sich beim Schadensfall die kapazitiven und induktiven Eigenschaften des gesamten Systems; mit dieser Änderung wird der Alarm ausgelöst. Mit zusätzlichem meßtechnischem Aufwand ist auch der Ort der Leckage leicht einzugrenzen. Die Potentiale im umgebenden Erdreich können erfindungsgemäß mit fernwirkenden Potentialmeßgeräten oder mit einer tragbaren Einstechsonde überprüft werden. Es kann auch ein im Rohrgraben mitverlegter nicht isolierter Leitungsdraht als Potentialmeßsonde dienen.

Im folgenden sei anhand einer Figur eine erfindungsgemäß eingerichtete Abwasserleitung beispielhaft beschrieben, wobei dieses Beispiel stellvertretend für mehrere mögliche Meßtechnikvarianten stehen soll, die unterschiedlich in ihrer Komfortausstattung sein können.

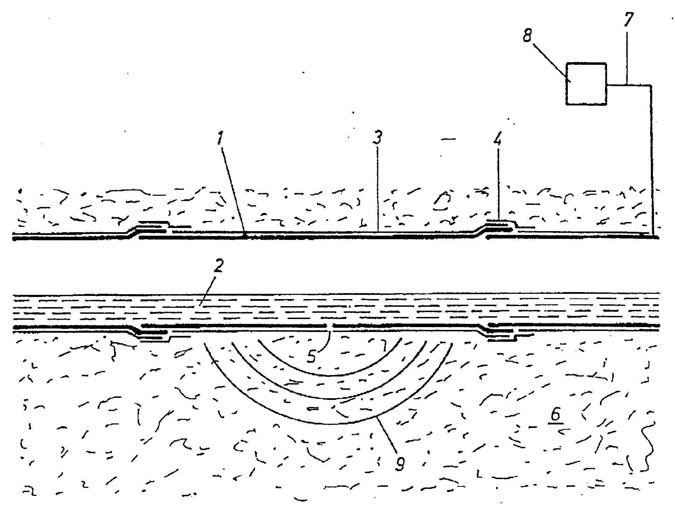

Die Figur zeigt schematisch eine im Erdreich (6) verlegte Rohrleitung aus duktilen Gußrohren (1) mit PE-Umhüllung (3) und Nachumhüllung des Verbindungsbereiches mit PE-Schrumpfschläuchen (4). Durch den Potentialgeber (8) und das Zuführungskabel (7) wird über die Eisenwand dem Abwasserstrom (2) das Potential aufgeprägt.

Tritt nun an der Leckstelle (5) das Abwasser (2) mit dem Erdboden (6) in Berührung, so breitet sich um die Leckstelle (5) das Potential (9) aus und kann mit einer nicht näher dargestellten Potentialsonde detektiert werden.

Es ist vorstellbar, daß die Potentialsonde aus einem bei der Verlegung im Rohrgraben mitverlegten nicht isolierten Leitungsdraht besteht.

Weiterhin ist vorstellbar, daß die Rohrleitung ohne Meßdraht verlegt wird, und daß die Potentiale turnusgemäß mit einer tragbaren Einstechsonde überprüft werden.

Weiterhin sind auch fernwirkende Potentialmessungen möglich.

## Patentansprüche

1. Verfahren zur Erkennung und Ortung von Leckagen an Abwassertransportleitungen, die vorzugsweise aus duktilen Gußrohren mit PE-Umhüllung bestehen, dadurch gekennzeichnet, daß dem Abwasserstrom ein elektrisches Potential aufgeprägt wird, welches im Falle einer Leckage im umgebenden Erdreich detektiert werden kann.

2. Verfahren nach Anspruch 1, dadurch gekennzeichnet, daß die aus duktilen Gußrohren mit PE-Umhüllung bestehende Abwassertransportleitung baustellenseitig in den Verbindungsbereichen mit wärmeschrumpfenden PE-Schrumpfschläuchen nachumhüllt werden.

3. Verfahren nach Anspruch 1 oder 2, dadurch gekennzeichnet, daß dem Abwasserstrom über eine Elektrode eine Potentialdifferenz gegenüber dem die Rohrleitung umgebenden Erdreich aufgeprägt wird.

4. Verfahren nach einem der Ansprüche 1 bis 3, dadurch gekennzeichnet, daß das Potential von einem Potentialgeber über ein Zuführungskabel und die Eisenwand des Rohres dem Abwasserstrom aufgeprägt wird.

5. Verfahren nach einem der Ansprüche 1 bis 4, dadurch gekennzeichnet, daß die Potentiale im umgebenden Erdreich mit fernwirkenden Potentialmeßgeräten oder mit einer tragbaren Einstechsonde überprüft werden.

6. Verfahren nach einem der Ansprüche 1 bis 5, dadurch gekennzeichnet, daß die Potentialmeßsonde aus einem im Rohrgraben mitverlegten nicht isolierten Leitungsdraht besteht.

## Claims

1. A method of identifying and locating leaks in waste water transport lines which preferably consist of ductile cast iron pipes with a PE cladding, characterised in that an electrical potential, which can be detected in the surrounding soil in the event of a leak, is impressed on the waste water stream.

2. A method according to claim 1, characterised in that the waste water transport line consisting of ductile cast iron pipes with a PE cladding is subsequently clad on site in its joint regions with shrinkable PE sleeves which are heat-shrinkable.

3. A method according to claim 1 or 2, characterised in that a potential difference in relation to the soil surrounding the pipeline is impressed on the waste water stream via an electrode.

4. A method according to any one of claims 1 to 3, characterised in that the potential is impressed on the water stream by a potential source via a supply cable and the iron wall of the pipe.

5. A method according to any one of claims 1 to 4, characterised in that the potentials in the surrounding soil are checked using remote-acting potential measuring devices or using a portable insertion probe.

6. A method according to any one of claims 1 to 5, characterised in that the potential measuring probe consists of an uninsulated conducting wire which is also laid in the pipe trench.

## Revendications

1. Procédé d'identification et de localisation de fuites sur des conduites de transport d'eaux usées, composées de préférence en tubes en fonte ductile à gainage en PE, caractérisé en ce que l'on imprime au courant d'eaux usées un potentiel électrique qui peut être détecté dans le cas d'une fuite dans le sous-sol environnant.

2. Procédé selon la revendication 1, caractérisé en ce que la conduite de transport d'eaux usées composée de tube en fonte ductile à gainage en PE est recouverte d'un deuxième gainage, posé sur site, dans les zones de liaison, à l'aide de tuyaux rétractables en PE, se rétractant sous l'effet de la chaleur.

3. Procédé selon la revendication 1 ou 2, caractérisé en ce que l'on imprime au courant d'eaux usées une différence de potentiel par rapport au sous-sol environnant la conduite tubulaire.

4. Procédé selon l'une des revendications 1 à 3, caractérisé en ce que le potentiel est imprimé au courant d'eaux usées par un transducteur de potentiel, par l'intermédiaire d'un câble d'amenée et par la paroi en fer du tube.

5. Procédé selon l'une des revendications 1 à 4, caractérisé en ce que les potentiels dans le sous-sol environnant sont contrôlés avec des appareils de télémesure de potentiel ou bien à l'aide d'une sonde à enficher portative.

6. Procédé selon l'une des revendications 1 à 5, caractérisé en ce que la sonde de mesure de potentiel est composée d'un fil métallique conducteur, posé conjointement dans les fouilles destinées à la conduite, non isolé.
